# EUROPÄISCHE PATENTSCHRIFT

(11) **EP 0 528 065 B1**
(45) Veröffentlichungstag und Bekanntmachung des Hinweises auf die Patenterteilung: **17.11.1994**
(21) Anmeldenummer: 91113826.1
(22) Anmeldetag: 17.08.1991
(51) Int. Cl.: B62B 1/12

(54) **Transportroller**
Trolley
Diable

(43) Veröffentlichungstag der Anmeldung: 24.02.1993
(73) Patentinhaber: LEIFHEIT Aktiengesellschaft, D-56377 Nassau (DE)
(72) Erfinder: Ohm, Heinz Josef, W-6250 Limburg 9 (DE); Tiwi, Peter, W-5409 Winden (DE)

(56) Entgegenhaltungen:
- FR-A- 2 584 358
- FR-A- 2 632 262

## Beschreibung

Die Erfindung bezieht sich auf einen zusammenlegbaren Transportroller entsprechend dem Oberbegriff des Anspruchs 1.

Derartige, beispielsweise aus der EP-B 33 092 bekannte Transportroller werden vornehmlich im Haushaltsbereich zum Transportieren von Koffern oder anderen schweren Gegenständen verwendet oder mit einem Behälter versehen zum Einkaufen benutzt.

Wesentlich für die Verbreitung derartiger Transportroller ist es, daß sie preiswert hergestellt werden können und trotzdem ein ansprechendes Ansehen haben. Die bekannten Transportroller erfüllen diese Forderungen nur zum Teil, da zu ihrer Herstellung aufgrund einer Vielzahl von Schweißverbindungen zwischen dem Griffbügel, der Radachse und den Lager- und Abstützstellen des klappbaren Tragbügels ein erheblicher Aufwand erforderlich ist. Die so durch Schweißen zusammengefügten Teile sind verhältnismäßig groß, so daß das nachfolgende Lackieren oder Verchromen verhältnismäßig aufwendig ist.

Der Erfindung liegt die Aufgabe zugrunde, einen Transportroller der gattungsgemäßen Art zu schaffen, der großseriengerecht aufgebaut ist, also wesentlich kostengünstiger hergestellt werden kann als die bekannten Transportroller.

Diese Aufgabe wird erfindungsgemäß durch die im Kennzeichen des Anspruchs 1 angegebenen Merkmale gelöst.

Bei dem erfndungsgemäßen Transportroller läßt sich die Verbindung der Radachse und des Tragbügels mit dem Griffbügel ohne irgendwelche Schweiß-, Klebe-, Schraub- oder Nietvorgänge auf einfache Weise durch Einstecken oder Einrasten dieser Teile in entsprechende öffnungen der Aufnahmeplatte erreichen. Dabei ist nicht nur die Verbindung dieser Teile wesentlich einfacher als bei dem Stand der Technik, sondern es wird insgesamt ein qualitativ hochwertigeres Erzeugnis geschaffen, da die Einzelteile vor dem Zusammenfügen lackiert oder verchromt werden können, was infolge der relativ geringen Abmessungen dieser Teile problemlos in hoher Qualität durchgeführt werden kann.

In einer bevorzugten Ausführungsform sind der Tragbügel und die Achse durch zwei Lagerböcke hindurchgesteckt, zwischen denen die Aufnahmeplatte angeordnet ist, die öffnungen zum Durchstecken der Griffholme und mindestens eine Aufnahme für die Achse aufweist, wobei die Lagerböcke mit dem Tragbügel um die Achse verschwenkbar sind und sich der Tragbügel in der Arbeitsstellung an den Griffholmen abstützt. Durch diese Ausbildung wird erreicht, daß von dem Tragbügel keine Kräfte auf die Aufnahmeplatte ausgeübt werden und die Aufnahmeplatte tatsächlich nur die Aufgabe hat, den Griffbügel, den Tragbügel und die Achse zusammenzuhalten. Dadurch, daß diese Teile in die Aufnahmeplatte bzw. in die Lagerböcke lediglich eingesteckt oder durch diese durchgesteckt werden, ist der Zusammenbau außerordentlich vereinfacht.

Vorzugsweise bestehen die Aufnahmeplatte und die Lagerböcke aus Kunststoff. Dadurch ergibt sich die Möglichkeit, an der Aufnahmeplatte eine Rastaufnahme zur Halterung des Tragbügels in seiner Arbeitsstellung vorzusehen. Die Halterung durch die Rastaufnahme kann noch verstärkt werden, wenn die Aufnahmeplatte im Bereich dieser Rastaufnahme hohl ist und in den Hohlraum eine Feder eingesetzt ist, die sich an der Wand des Hohlraumes abstützt, an welcher der Tragbügel in seiner Arbeitsstellung anliegt. Der Tragbügel kann dabei von einem U-förmigen Rohr gebildet sein, wobei die freien Enden der Schenkel durch einen aufgesteckten Fußbügel miteinander verbunden sind.

Um die Abmessungen des Transportrollers im zusammengelegten Zustand zu verkleinern, kann der Griffbügel aus zwei U-förmigen Rohren bestehen, die mit den freien Enden ihrer Schenkel teleskopartig ineinandergreifen und von denen der Steg des ersten Rohres als Handgriff dient, während der Steg des zweiten Rohres parallel zur Radachse verläuft und in einer halbkreisförmigen Aussparung längs der Unterseite der Aufnahmeplatte liegt und seine Schenkel sich durch öffnungen in der Aufnahmeplatte nach oben erstrecken. Dadurch wird die Stabilität des Transportrollers erhöht. Eine weitere Verbesserung der Stabilität kann dadurch erreicht werden, daß eine Zwischenplatte mit zwei Durchgangsbohrungen vorgesehen ist, in welche die Enden der Schenkel des zweiten Rohres eingesteckt sind. Die Enden der Schenkel des ersten Rohres sind dabei in den Enden der Schenkel des zweiten Rohres geführt, wobei in ein Ende mindestens eines Schenkels des ersten Rohres ein Spreizkörper eingesetzt werden kann, der mit Reibschluß an der Innenwand des betreffenden Schenkels des zweiten Rohres anliegt. Um ein Herausziehend des ersten Rohres aus dem zweiten Rohr zu verhindern, ist in der betreffenden Durchgangbohrung der Zwischenplatte ein Anschlag für den Spreizkörper vorgesehen.

Um den Griffbügel in seiner Lange fixieren zu können, kann die Zwischenplatte im Bereich einer der Durchgangsbohrungen einen Ausschnitt aufweisen, der durch eine teilzylindrische, zu der Durchgangsbohrung koaxiale Wand begrenzt ist und in den eine drehbare Klemmvorrichtung eingesetzt ist, die einen zumindest teilweise zylindrischen Grundkörper aufweist, dessen Außenfläche einen Radius hat, der dem Radius der teilzylindrischen Wand entspricht, und der mit einer zu der Außenfläche exzentrischen Durchgangsbohrung versehen ist, durch die das Ende eines Schenkels des ersten Rohres hindurchgeführt ist. Durch die exzentrische Lage der Durchgangsbohrung wird beim Verdrehen der Klemmvorrichtung eine Klemmkraft zwischen der teilzylindrischen Wand der Aussparung und dem Schenkel des ersten Rohres erzeugt oder diese aufgehoben.

Ein Ausführungsbeispiel der Erfindung wird im folgenden unter Bezugnahme auf die Zeichnungen beschrieben. Es zeigt:
- Fig. 1: eine perspektivische Darstellung eines Transportrollers
- Fig. 2: einen Schnitt entlang Linie A-A in Fig. 1
- Fig. 3: eine Ansicht des Transportrollers von unten in Richtung des Pfeils B in Fig. 1, wobei die Lagerböcke im Längsschnitt durch die Achse dargestellt sind,
- Fig. 4: eine Ansicht der Zwischenplatte zwischen den Holmen des Griffbügels, teilweise geschnitten und
- Fig. 5: einen Schnitt entlang Linie C-C in Fig. 4.

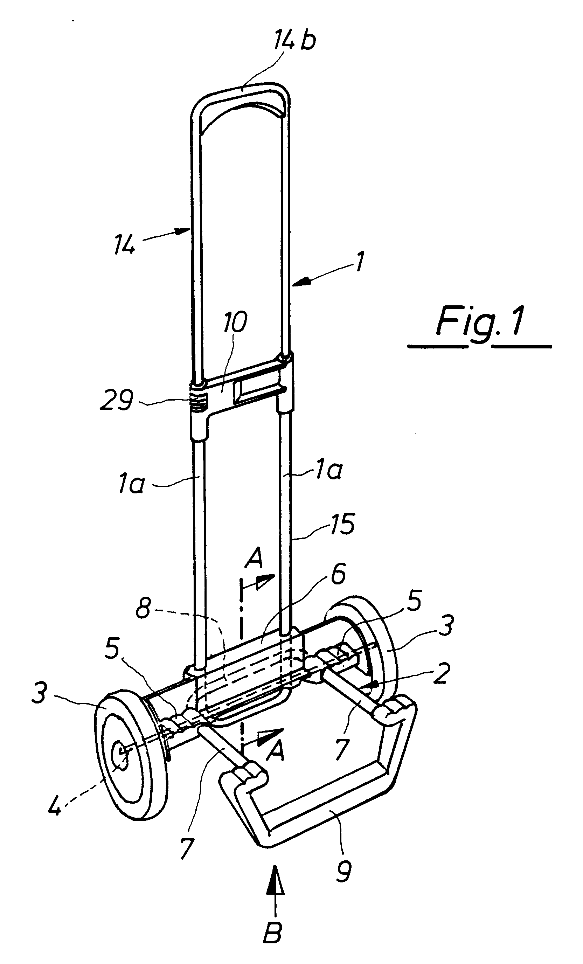

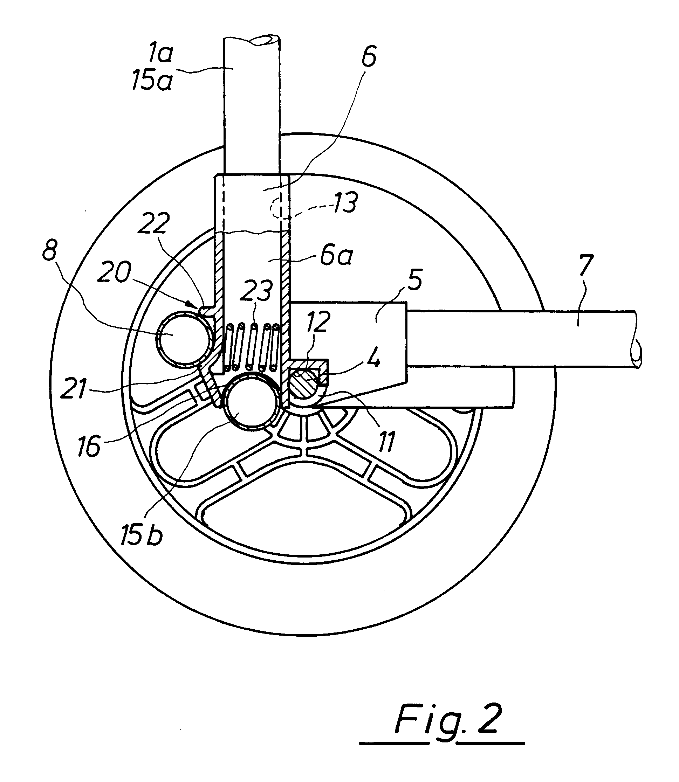

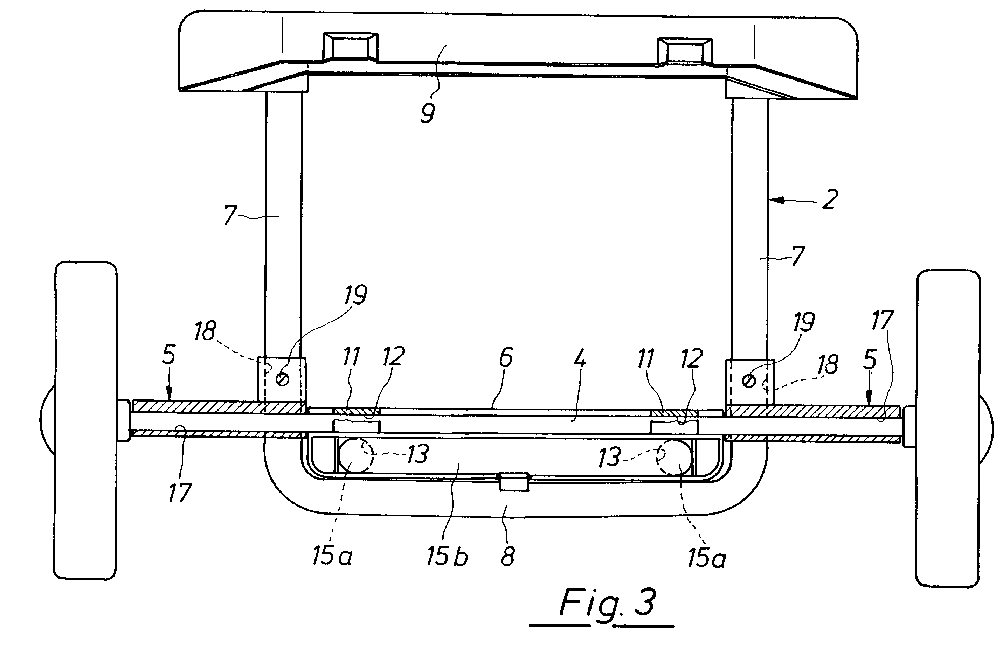

Der in Fig. 1 dargestellte Transportroller weist als Hauptbestandteile einen allgemein mit 1 bezeichneten Griffbügel mit Griffholmen 1a, einen Tragbügel 2 und eine die Räder 3 tragende Achse 4 auf. Der Tragbügel 2 und die Achse 4 sind in zwei Lagerböcken 5 gelagert und mit dem Griffbügel 1 durch eine Aufnahmeplatte 6 verbunden, durch die einerseits die Holme 1a des Griffbügels 1 und andererseits die Achse 4 hindurchgesteckt sind.. Die Lagerböcke 5 sind zusammen mit dem Tragbügel 2 um die Achse 4 schwenkbar. Der Tragbügel 2 ist ein U-förmiges Rohr mit zwei Schenkeln 7, die sich durch die Lagerböcke 5 erstrecken, und mit einem diese verbindenden Steg 8, der in der gezeigten Arbeitsstellung des Tragbügels 2 an der Rückseite der Griffholme 1a anliegt, wie dies später in Verbindung mit den Fig. 2 und 3 beschrieben wird. Die freien Enden der Schenkel 7 des Tragbügels 2 sind durch einen aufgesteckten Fußbügel 9 miteinander verbunden. Die Griffholme 1a sind durch eine Zwischenplatte 10 miteinander verbunden.

Wie aus den Fig. 2 und 3 ersichtlich ist, weist die Aufnahmeplatte 6 nahe ihres unteren Endes zwei Ansätze 11 mit Längsbohrungen 12 auf, durch welche die Achse 4 hindurchgesteckt ist. Ferner ist die Aufnahmeplatte 6 mit zwei senkrecht zu den Längsbohrungen 12 verlaufenden Bohrungen 13 versehen, durch welche die Griffholme 1a hindurchgeführt sind, die durch nicht gezeigte Bohrschrauben in der Aufnahmeplatte 6 fixiert sind. Der Griffbügel 1 ist im Ausführungsbeispiel zweiteilig und er besteht aus zwei U-förmigen Rohren 14 und 15. Beide Rohre weisen Schenkel 14a bzw. 15a und einen diese verbindenden Steg 14b und 15b auf. Der Außendurchmesser der Schenkel 14a ist geringfügig kleiner als der Innendurchmesser der Schenkel 15a, so daß das Rohr 14 teleskopartig in das Rohr 15 eingeschoben werden kann. Die Schenkel 14a und 15a bilden die Griffholme 1a von Fig. 1. Der Steg 15b des Rohres 15 liegt in einer halbkreisförmigen Aussparung 16 an der Unterseite der Aufnahmeplatte 6. Wie aus Fig. 3 ersichtlich ist, liegt der Steg 8 des Tragbügels 2 in der Arbeitsstellung über die Wand der Aufnahmeplatte 6 direkt an den Schenkeln 15a des U-förmigen Rohres 15 an. Der Schenkel 14b des Rohres 14 dient als Handgriff.

Die Aufnahmeböcke 5 weisen jeweils eine Längsbohrung 17 und eine Querbohrung 18 auf. Die Querbohrungen 18 dienen zur Aufnahme der Schenkel 7 des Tragbügels 2, die durch Bohrschrauben 19 in den Lagerböcken fixiert sind. Die Achse 4 ist durch die Längsbohrungen 17 der Lagerböcke 5 und durch die Längsbohrungen 12 in den Ansätzen 11 der Aufnahmeplatte 6 hindurchgesteckt, wodurch die Lagerböcke 5 mit der Aufnahmeplatte 6 und dadurch der Tragbügel 2 und die Achse 4 mit den Schenkeln 15a des U-förmigen Rohres 15 oder, allgemein ausgedrückt, mit den Griffholmen 1a des Griffbügels 1 verbunden sind. Es ist ersichtlich, daß diese Verbindung ausschließlich durch Zusammenstecken der einzelnen Teile vorgenommen wird.

Zur Halterung des Tragbügels 2 in seiner Arbeiststellung ist an der Aufnahmeplatte 6 eine Rasteinrichtung 20 mit zwei Raststellen 21 und 22 vorgesehen, zwischen denen der Steg 8 des Tragbügels 2 klemmend gehalten wird. Die Aufnahmeplatte 6 ist aus Kunststoff und zumindest im Bereich der Rasteinrichtung 20 hohl. Um die Klemmung des Steges 8 auf Dauer sicherzustellen, ist in dem Hohlraum 6a eine Druckfeder 23 angeordnet, die sich auf der Wand des Hohlraumes 6a im Bereich der Anlagestelle des Schenkels 8 abstützt.

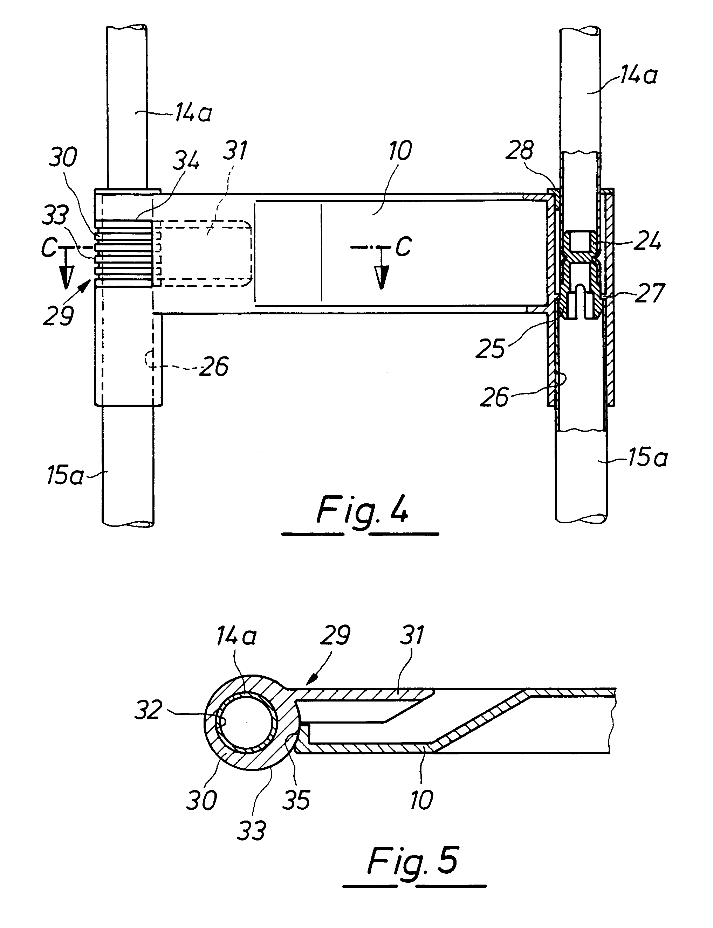

Wie vorher erwähnt, sind die Schenkel 14a des U-förmigen Rohres 14 des Griffbügels 1 teleskopartig in die Schenkel 15a des U-förmigen Rohres 15 verschiebbar. Um dieser Verschiebung einen gewissen Widerstand entgegenzusetzen, ist, wie aus Fig. 4 ersichtlich, in das Ende des einen Schenkels 14a ein Spreizkörper 24 eingesetzt, der federnde Zungen 25 aufweist, die mit Reibschluß an der Innenwand des Schenkels 15a anliegen. Um ein vollständiges Herausziehen des U-förmigen Rohres 14 aus dem U-förmigen Rohr 15 zu verhindern, ist in der Bohrung 26 der Zwischenplatte 10, welche die Enden der Schenkel 14a und 15a aufnimmt, ein Anschlag 27 vorgesehen, der von den federnden Zungen 25 des Spreizkörpers 24 hintergriffen wird. Der Schenkel 15a ist mit Reibschluß in der Bohrung 26 gehalten. Ein Ring 28 deckt den Spalt zwischen der Wand der Bohrung 26 und dem Schenkel 14a ab.

Um das U-förmige Rohr 14 in jeder Lage fixieren zu können, ist in der Zwischenplatte 10 für den anderen, in Fig. 4 linken Schenkel 14a eine Klemmvorrichtung 29 vorgesehen, die im einzelnen in Fig. 5 dargestellt ist. Die Klemmvorrichtung 29 weist einen zylindrischen Grundkörper 30 auf, von dem sich ein Griffhebel 31 erstreckt, und sie hat eine Durchgangsbohrung 32, durch welche der Schenkel 14a hindurchgeführt ist. Die Durchgangsbohrung 32 ist exzentrisch zu der zylindrischen Außenfläche 33 des Grundkörpers 30. Die Klemmvorrichtung 29 ist in einen Aussschnitt 34 der Zwischenplatte 15 eingesetzt und sie wird in dieser Aussparung durch den Schenkel 14a gehalten und ist um diesen Schenkel drehbar. Der Ausschnitt 34 ist von einer teilzylindrischen Wand 35 begrenzt, deren Radius dem Radius der Außenfläche 33 des zylindrischen Grundkörpers 30 entspricht. In Fig. 5 ist die Klemmvorrichtung in der Klemmstellung dargestellt, in welcher der Schenkel 14a durch den Grundkörper 30 gegenüber der Außenfläche 35 verspannt wird. Wird die Klemmvorrichtung 29 in Fig. 5 entgegen dem Uhrzeigersinn verschwenkt, so wird diese Klemmung verringert bzw. aufgehoben, weil dann aufgrund der exzentrischen Lage der Durchgangsbohrung 32 die Wandstärke des zylindrischen Grundkörpers 30 zwischen dem Rohr 14a und der teilzylindrischen Wand 35 geringer ist. Die Wand 35 kann mit der Wand der Durchgangsbohrung 26 fluchten, welche wie in der rechten Hälfte von Fig. 4 dargestellt, den Schenkel 15a aufnimmt.

Die Lagerböcke 5, die Aufnahmeplatte 6 und die Zwischenplatte 10 bestehen vorzugsweise aus Kunststoff.

Es ist ersichtlich, daß sämtliche Einzelteile des Transportrollers lediglich durch Steckverbindungen miteinander verbunden sind und nur zur Fixierung des Tragbügels 8 in den Lagerböcken 5 und der Griffholme 1a bzw. der Schenkel 15a in der Aufnahmeplatte 10 einige Bohrschrauben vorgesehen sind. Dadurch wird eine weitgehend vollautomatische Herstellung ermöglicht.

## Patentansprüche

1. Zusammenlegbarer Transportroller mit einem Griffbügel (1) mit zwei Griffholmen (1a), die an ihren unteren Enden mit einer zwei Räder (3) tragenden Achse (4) und mit einem zwischen einer Ruhestellung und einer Arbeitsstellung klappbaren Tragbügel (2) verbunden sind, dadurch gekennzeichnet, daß der Tragbügel (2) über zwei Lagerböcke (5) und die Griffbügel (1) über eine Aufnahmeplatte (6) durch die Achse (4) miteinander verbunden sind.

2. Transportroller nach Anspruch 1, dadurch gekennzeichnet, daß der Tragbügel (2) und die Achse (4) durch zwei Lagerböcke (5) hindurchgesteckt sind und daß die Aufnahmeplatte (6) zwischen den Lagerböcken angeordnet ist und öffnungen (13) zum Ein- oder Durchstecken der Griffholme (1a bzw. 15a) sowie mindestens eine Aufnahme (12) für die Achse (4) aufweist, und daß die Lagerböcke (5) mit dem Tragbügel (2) um die Achse (4) schwenkbar sind, wobei sich der Tragbügel (2) in der Arbeitsstellung an den Griffholmen (1a bzw. 15a) abstützt.

3. Transportroller nach Anspruch 2, dadurch gekennzeichnet, daß die Aufnahmeplatte (6) und die Lagerböcke (5) aus Kunststoff bestehen.

4. Transportroller nach Anspruch 2 oder 3, dadurch gekennzeichnet, daß an der Aufnahmeplatte (6) mindestens eine Rastaufnahme (20) zur Halterung des Tragbügels (2) in dessen Arbeitsstellung vorgesehen ist.

5. Transportroller nach Anspruch 4, dadurch gekennnzeichnet, daß die Aufnahmeplatte (6) zumindest im Bereich der Rastaufnahme (20) hohl ist und daß in den Hohlraum (6a) eine Feder (23) eingesetzt ist, die sich auf die Wand des Hohlraumes abstützt, an welcher der Tragbügel (2) in seiner Arbeitsstellung anliegt.

6. Transportroller nach einem der Ansprüche 2 bis 5 , dadurch gekennzeichnet, daß der Tragbügel (2) von einem U-förmigen Rohr gebildet ist, dessen Schenkel (7) sich durch die Lagerböcke (5) erstrecken und dessen Steg (8) in der Arbeitsstellung an den Griffholmen (1a bzw. 15a) anliegt, und daß die freien Enden der Schenkel durch einen aufgesteckten Fußbügel (9) miteinander verbunden sind.

7. Transportroller nach einem der Ansprüche 2 bis 6, dadurch gekennzeichnet, daß der Griffbügel (1) aus zwei U-förmigen Rohren 14,15) besteht, die mit den freien Enden ihrer Schenkel (14a,15a) teleskopartig ineinandergreifen und von denen der Steg (14b) des ersten Rohres (14) als Handgriff dient, während der Steg (15b) des zweiten Rohres (15) parallel zu der Achse (4) verläuft und in einer halbkreisförmigen Aussparung (16) längs der Unterseite der Aufnahmeplatte (6) liegt und seine Schenkel (15a) sich durch öffnungen (13) in der Aufnahmeplatte nach oben erstrecken.

8. Transportroller nach Anspruch 7, dadurch gekennzeichnet, daß die Enden der Schenkel (14a) des ersten Rohres (14) in den Enden der Schenkel (15a) des zweiten Rohres (15) geführt sind und daß eine Zwischenplatte (10) mit zwei Durchgangsbohrungen (26) vorgesehen ist, in welche die Enden der Schenkel (15a) des zweiten Rohres (15) eingesteckt sind.

9. Transportroller nach den Ansprüchen 7 und 8, dadurch gekennzeichnet, daß in ein Ende mindestens eines Schenkels des ersten Rohres (14) ein Spreizkörper (24) eingesetzt ist, der mit Reibschluß an der Innenwand des betreffenden Schenkels des zweiten Rohres (15) anliegt, und daß in der betreffenden Durchgangsbohrung (26) der Zwischenplatte (10) ein Anschlag (27) für den Spreizkörper (24) vorgesehen ist, der ein Herausziehen des ersten Rohres (14) aus dem zweiten Rohr (15) verhindert.

10. Transportroller nach Anspruch 8 oder 9, dadurch gekennzeichnet, daß die Zwischenplatte (10) im Bereich einer der Durchgangsbohrungen (26) einen Ausschnitt (34) aufweist, der durch eine teilzylindrische, zu der Durchgangsbohrung (26) koaxiale Wand (35) begrenzt ist und in den eine drehbare Klemmvorrichtung (29) eingesetzt ist, die einen zumindest teilzylindrischen Grundkörper (30) aufweist, dessen Außenfläche (33) einen Radius hat, der dem Radius der teillzylindrischen Wand (35) entspricht, und der mit einer zu der Außenfläche (33) exzentrischen, das Ende eines Schenkels (14a) des ersten Rohres (14) aufnehmenden Durchgangsbohrung (32) versehen ist.

## Claims

1. Collapsible transport trolley having a handle rail (1) exhibiting two handle struts (1a), which are connected at their lower ends to an axle (4) supporting two wheels (3) and to a supporting rail (2) which can be tilted between a rest setting and a work setting, characterized in that the supporting rail (2), via two bearing blocks (5), and the handle rails (1), via a receiving plate (6), are interconnected by the axle (4).

2. Transport trolley according to Claim 1, characterized in that the supporting rail (2) and the axle (4) are passed through by two bearing blocks (5), and in that the receiving plate (6) is disposed between the bearing blocks and exhibits openings (13) for the insertion or pass-through of the handle struts (1a or 15a) and at least one fixture (12) for the axle (4), and in that the bearing blocks (5) can be pivoted with the supporting rail (2) about the axle (4), the supporting rail (2) being supported, in the work setting, against the handle struts (1a or 15a).

3. Transport trolley according to Claim 2, characterized in that the receiving plate (6) and the bearing blocks (5) consist of plastic.

4. Transport trolley according to Claim 2 or 3, characterized in that on the receiving plate (6) there is provided at least one latching fixture (20) for holding the supporting rail (2) in its work setting.

5. Transport trolley according to Claim 4, characterized in that the receiving plate (6), at least in the region of the latching fixture (20), is hollow, and in that a spring (23) is inserted into the cavity (6a), which spring is supported on that wall of the cavity which is borne against by the supporting rail (2) in its work setting.

6. Transport trolley according to one of Claims 2 to 5, characterized in that the supporting rail (2) is formed by a U-shaped tube, the limbs (7) of which extend through the bearing blocks (5) and the crosspiece (8) of which bears in the work setting against the handle struts (1a or 15a), and in that the free ends of the limbs are interconnected by a mounted foot rail (9).

7. Transport trolley according to one of Claims 2 to 6, characterized in that the handle rail (1) comprises two U-shaped tubes (14, 15), which interlock telescopically with the free ends of their limbs (14a, 15a), and of which the crosspiece (14b) of the first tube (14) serves as a handle rail, whilst the crosspiece (15b) of the second tube (15) runs parallel to the axle (4) and lies in a semicircular recess (16) along the bottom side of the receiving plate (6) and its limbs (15a) extend upwards through openings (13) in the receiving plate.

8. Transport trolley according to Claim 7, characterized in that the ends of the limbs (14a) of the first tube (14) are guided in the ends of the limbs (15a) of the second tube (15), and in that an intermediate plate (10) having two pass-through bores (26) is provided, into which the ends of the limbs (15a) of the second tube (15) are inserted.

9. Transport trolley according to Claims 7 and 8, characterized in that into one end of at least one limb of the first tube (14) there is inserted an expanding element (24), which bears with frictional grip against the inner wall of the limb in question of the second tube (15), and in that, in the pass-through bore (26) in question of the intermediate plate (10), there is provided a stop (27) for the expanding element (24), which stop prevents the first tube (14) from being pulled out of the second tube (15).

10. Transport trolley according to Claim 8 or 9, characterized in that the intermediate plate (10) exhibits, in the region of one of the pass-through bores (26), a cut-out (34), which is limited by a partly cylindrical wall (35) coaxial to the pass-through bore (26), and into which there is inserted a rotatable clamping device (29) exhibiting an at least partly cylindrical basic element (30), the outer face (33) of which has a radius corresponding to the radius of the partly cylindrical wall (35) and which is provided with a pass-through bore (32), which is eccentric to the outer face (33) and receives the end of a limb (14a) of the first tube (14).

## Revendications

1. Diable pliable comprenant une armature formant poignée (1) à deux longerons (1a) qui sont reliés à leurs extrémités inférieures à un essieu (4) supportent deux roues (3), et une armature de support de charge (2) rabattable entre une position de repos et une position de travail, caractérisé en ce que l'armature de support de charge (2) et l'armature formant poignée (1) sont reliées l'une à l'autre par l'essieu (4), la première par l'intermédiaire de deux blocs de support (5) et la seconde par l'intermédiaire d'une plaque de réception (6).

2. Diable selon la revendication 1, caractérisé en ce que l'armature de support de charge (2) et l'essieu (4) s'étendent dans deux blocs de support (5) et en ce que la plaque de réception (6) est disposée entre les blocs de support et comprend des ouvertures (13) pour l'insertion ou le passage des longerons (1a ou 15a) ainsi qu'au moins un logement (12) pour l'essieu (4), et en ce que les blocs de support (5) peuvent pivoter avec l'armature de support de charge (2) autour de l'essieu (4), l'armature de support de charge (2) s'appuyant en position de travail contre les longerons (1a ou 15a).

3. Diable selon la revendication 2, caractérisé en ce que la plaque de réception (6) et les blocs de support (5) sont en matière synthétique.

4. Diable selon la revendication 2 ou 3, caractérisé en ce qu'un évidement à enclenchement (20) au moins, destiné au maintien de l'armature de support de charge (2) dans sa position de travail, est prévu sur la plaque de réception (6).

5. Diable selon la revendication 4, caractérisé en ce que la plaque de réception (6) est creuse au moins dans la région de l'évidement à enclenchement (20) et en ce qu'un ressort (23) est disposé dans l'espace creux (6a), ressort qui s'appuie contre la paroi de l'espace creux sur laquelle s'applique l'armature de support de charge (2) sans sa position de travail.

6. Diable selon l'une quelconque des revendications 2 à 5, caractérisé en ce que l'armature de support de charge (2) est constituée par un tube en forme de U dont les branches (7) s'étendent à travers les blocs de support (5) et dont la traverse (8) s'appuie dans la position de travail contre les longerons (1a ou 15a), et en ce que les extrémités libres des branches sont reliées l'une à l'autre par un étrier d'appui (9) enfoncé sur elles.

7. Diable selon l'une quelconque des revendications 2 à 6, caractérisé en ce que l'armature formant poignée (1) est constituée par deux tubes en forme de U (14, 15) qui pénètrent télescopiquement l'un dans l'autre par las extrémités libres de leurs branches (14a, 15a) et dont la traverse (14b) du premier tube (14) sert de poignée, alors que la traversa (15b) du second tube (15) est parallèle à l'essieu (4) et sa dispose dans un évidement de forme semi-circulaire (16) le long du côté inférieur de la plaque de réception (6), et ses branches (15a) s'étendent vers le haut en passant dans des ouvertures (13) de la plaque de réception.

8. Diable salon la revendication 7, caractérisé en ce que les extrémité des branches (14a) du premier tube (14) sont introduites dans les extrémités des branches (15a) du second tuba (15) et en ce qu'il est prévu une plaque intermédiaire (10) comportant d'eux alésages traversants (26), dans lesquels sont enfoncées les extrémités des branches (15a) du second tube (15).

9. Diable selon les revendications 7 et 8, caractérisé en ce qu'un élément expansible (24) est disposé dans uns extrémité d'au moins une branche du premier tube (14), qui s'applique par frottement contre la paroi interne de le branche correspondante du second tube (15), et en ce qu'une butée (27) destinée à l'élément expansible (24) est prévue dans l'alésage traversant correspondant (26) de la plaque intermédiaire (10), butée qui empêche l'extraction du premier tube (14) à partir du second tube (15).

10. Diable selon la revendication 8 ou 9, caractérisé en ce que la plaque intermédiaire (10) comprend une découpe (34) dans la région de l'un des alésages traversants (26), qui est limitée par une paroi (35) partiellement cylindrique et coaxiale à l'alésage traversant (26) et dans laquelle est introduit un dispositif de serrage rotatif (29) qui comprend au moins un élément de base partiellement cylindrique (30) dont la surface externe (33) présente un rayon qui correspond au rayon de la paroi partiellement cylindrique (35) et qui est muni d'un alésage traversant (32) excentrique par rapport à la surface externe (33) et recevant l'extrémité d'une branche (14a) du premier tube (14).
